# EUROPEAN PATENT APPLICATION

(11) **EP 4 253 907 A1**
(43) Date of publication of application: **04.10.2023**
(21) Application number: 23165294.2
(22) Date of filing: 30.03.2023
(51) Int. Cl.: G01C 15/00, G02B 27/01

(54) **POINT CLOUD INFORMATION GENERATING SYSTEM, CONTROL METHOD OF POINT CLOUD INFORMATION GENERATING SYSTEM, AND CONTROL PROGRAM OF POINT CLOUD INFORMATION GENERATING SYSTEM**

(30) Priority: 31.03.2022 JP 2022060555; 30.09.2022 JP 2022157915
(71) Applicant: TOPCON CORPORATION, Tokyo 174-8580 (JP)
(72) Inventor: SASAKI, Takeshi, Tokyo, 174-8580 (JP); MISHIMA, Masahito, Tokyo, 174-8580 (JP)
(74) Representative: Mewburn Ellis LLP

(57) **Abstract**

A point cloud information generating system or the like is provided that can easily and speedily generate point cloud information regarding a desired object. The point cloud information generating system includes a point cloud information generating device that generates three-dimensional point cloud information on an object, and a XR generating device that is wearable by a user. The XR generating device includes an image-capturing part that acquires image-capturing information in accordance with at least a line of sight of the user, and a display part that displays the image-capturing information. Three-dimensional point cloud information is generated, on the basis of execution instruction information regarding the object displayed on the display part, for the object specified by the point cloud information generating device in the execution instruction information.

## Description

### BACKGROUND OF THE INVENTION

### 1. Field of the Invention

The present invention relates to a point cloud information generating system for acquiring point cloud information on an object, a control method of the point cloud information generating system, and a non-transitory computer-readable medium storing computer program instructions for the point cloud information generating system.

### 2. Description of the Related Art

For ascertaining, for example, the form and so forth of a building in a construction or building site or the like, there conventionally is proposed a technology in which a three-dimensional scanner device casts laser or the like and acquires point cloud data of the three-dimensional form of a building or the like, which is an object (e.g., Japanese Patent Application Publication No. 2018-66571).

### SUMMARY OF THE INVENTION

However, there is demand, from actual sites, for acquisition of point cloud data not of the entire building itself, but of a part thereof, such as one pillar, or the like.

In such cases, operating a scanner device to cast laser on one particular pillar alone, or the like, and acquire point cloud data thereof is laborious and leads to increased costs, which is problematic.

Accordingly, an object of the present invention is to provide a point cloud information generating system that can easily and speedily generate point cloud information regarding a desired object, a control method of the point cloud information generating system, and a non-transitory computer-readable medium storing computer program instructions for the point cloud information generating system.

According to the present invention, the above object is realized by a point cloud information generating system including a point cloud information generating device that generates three-dimensional point cloud information on an object, and a cross reality (XR) generating device that is wearable by a user. The XR generating device includes an image-capturing part that acquires image-capturing information in accordance with at least a line of sight of the user, and a display part. Three-dimensional point cloud information is generated, on the basis of execution instruction information regarding the object displayed on the display part, for the object specified by the point cloud information generating device in the execution instruction information.

According to this configuration, the point cloud information generating device can automatically generate point cloud information regarding an object just by the user wearing the XR generating device and inputting execution instruction information regarding the object.

Accordingly, point cloud information can be easily and speedily generated regarding a desired object.

Preferably, the three-dimensional point cloud information is generated for a part of the object that is specified on the basis of the execution instruction information of the point cloud information generating system.

According to this configuration, by specifying part of the object on the basis of the execution instruction information, three-dimensional point cloud information can be easily and speedily generated just for the part of the object.

Preferably, the point cloud information generating device includes an optical axis deflecting part that emits ranging light for generating point cloud information and also deflects an emission direction of the ranging light, and is configured to cast the ranging light on only part of the object, by deflecting the ranging light by the optical axis deflecting part.

According to this configuration, by the optical axis deflecting part of the point cloud information generating device deflecting and casting ranging light toward the part of the object identified on the basis of the execution instruction information, three-dimensional point cloud information can be generated just for the part of the object with good precision.

Preferably, a highly reflective portion, which is at least either uniquely formed or uniquely placed, is placed on the XR generating device of the point cloud information generating system.

According to this configuration, providing the highly reflective portion, which is at least either uniquely formed or uniquely placed, enables not only the position of the XR generating device but also the tilt thereof to be found with good precision, and the precision of detection of coordinates or the like generated by the XR generating device can be improved.

Preferably, the point cloud information generating system is configured to display, on the display device, blueprint information.

According to the above configuration, the surroundings and so forth of a structure or the like that is still in the blueprint stage and that does not exist yet at the actual building site can be specified as a range, and three-dimensional point cloud information can be acquired.

Also, at the time of performing inspection through comparison with blueprint information after actually installing a member or the like in the building site or the like, the object of inspection or the like can be intuitively specified and so forth by specifying the member or the like to be inspected in the blueprint information, and acquiring three-dimensional point cloud information of the item installed in real space.

Also, in a case in which the position of the member or the like in the blueprint is different from the planned location for installation or the like and is "deviated", work of acquiring three-dimensional point cloud information before completion of installation and changing to a position of installation or the like after completion can be easily and speedily carried out, while visually confirming the amount of this difference.

According to the present invention, the above object is achieved by a control method of a point cloud information generating system including a point cloud information generating device that generates three-dimensional point cloud information on an object, and a XR generating device that is wearable by a user. The control method includes acquiring, by an image-capturing part of the XR generating device, image-capturing information in accordance with a line of sight of the user, and generating three-dimensional point cloud information, on the basis of execution instruction information regarding the object displayed on a display part, for the object specified by the point cloud information generating device in the execution instruction information.

According to the present invention, the above object is achieved by non-transitory computer-readable medium storing computer program instructions for that causes a point cloud information generating system including a point cloud information generating device that generates three-dimensional point cloud information of an object and a XR generating device that is wearable by a user, to implement a function of acquiring, by an image-capturing part of the XR generating device, image-capturing information in accordance with a line of sight of the user, and a function of generating three-dimensional point cloud information, on the basis of execution instruction information regarding the object displayed on a display part, for the object specified by the point cloud information generating device in the execution instruction information.

An advantage of the present invention is being able to provide a point cloud information generating system that can easily and speedily generate point cloud information regarding a desired object, a control method of the point cloud information generating system, and a non-transitory computer-readable medium storing computer program instructions for the point cloud information generating system.

### BRIEF DESCRIPTION OF THE DRAWINGS

FIG. 1 is a schematic diagram illustrating principal configurations of a "point cloud information generating system 500" according to an embodiment;
FIG. 2 is a schematic diagram illustrating principal configurations of a laser scanner 3 in FIG. 1;
FIG. 3 is a schematic diagram illustrating principal configurations of an optical axis deflecting part 35 in FIG. 2;
FIG. 4 is a schematic block diagram illustrating principal configurations of a head-mounted display (HMD) 100 in FIG. 1;
FIG. 5 is a schematic block diagram illustrating principal components of an "HMD-side various-information storage part 120" in FIG. 4;
FIG. 6 is a schematic block diagram illustrating principal configurations of the laser scanner 3 in FIG. 1;
FIG. 7 is a schematic block diagram illustrating principal configurations of a "laser-scanner-side various-information storage unit 310" in FIG. 6;
FIG. 8 is a schematic flowchart showing an operation example of the point cloud information generating system 500;
FIG. 9 is another schematic flowchart showing the operation example of the point cloud information generating system 500;
FIG. 10 is a schematic explanatory diagram illustrating an example of a scanning pattern in a case of the optical axis deflecting part 35 and so forth performing local scanning;
FIGS. 11A and 11B are other schematic explanatory diagrams illustrating examples of scanning patterns in a case of the optical axis deflecting part 35 and so forth performing local scanning; and
FIG. 12 is a schematic diagram illustrating a modification of the point cloud information generating system 500 according to the embodiment.

### DESCRIPTION OF THE PREFERRED EMBODIMENTS

A preferred embodiment of this invention will be described in detail below with reference to the attached Figures and so forth.

Note that due to the embodiment described below being a preferred specific example of the present invention, various types of limitations that are technologically preferred are given, however, the scope of the present invention is not limited to this embodiment unless particularly state in the following description that the present invention is to be limited.

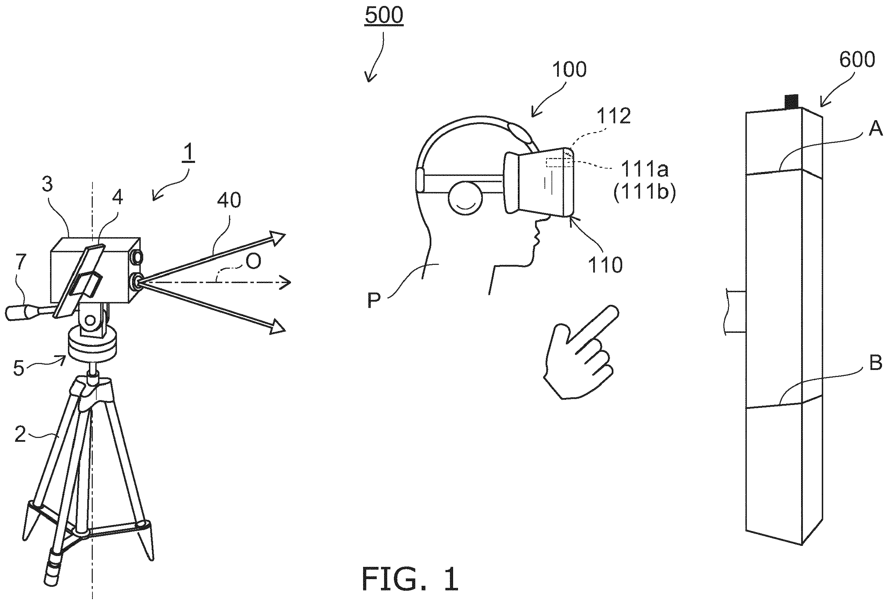

FIG. 1 is a schematic diagram illustrating principal configurations of a "point cloud information generating system 500" according to the present embodiment.

The point cloud information generating system 500 includes a "surveying instrument 1" that is an example of a point cloud information generating device, and a "head-mounted display (HMD) 100" that is an example of a cross reality (XR) generating device, as illustrated in FIG. 1.

Now, XR is a concept that includes "virtual reality (VR)", "augmented reality (AR)", and "mixed reality (MR)". The following description will be made by way of example of MR in the present embodiment.

Accordingly, the XR generating device according to the present invention is not limited to the MR according to the present embodiment, and also includes VR, AR, and so forth.

This surveying instrument 1 includes a laser scanner 3, which generates three-dimensional point cloud information of an object (e.g., a pillar 600 or the like) by performing scanning or the like, and so forth.

Also, the head-mounted display 100 is configured to be worn on the head by a user (e.g., a worker P) of this system 500.

As illustrated in FIG. 1, the surveying instrument 1 has the laser scanner 3. The laser scanner 3 is capable of acquiring three-dimensional point cloud data by casting and receiving laser light, and also is capable of performing ranging regarding a particular measurement point.

That is to say, the laser scanner 3 is configured to be capable of acquiring three-dimensional point cloud data of an object such as the pillar 600 in FIG. 1 or the like, and distance data between the laser scanner 3 and the pillar 600.

The laser scanner 3 is also configured to be capable of acquiring distance data as to the head-mounted display 100 and so forth, as well.

Principal Configurations, etc., of Head-Mounted Display 100

Configurations of the head-mounted display 100, the surveying instrument 1, and so forth, will be described in detail below.

The head-mounted display 100 according to the present embodiment is equipment for mixed reality, for example.

Specifically, the head-mounted display 100 is configured to be capable of transmitting information of the real world through a transmissive-type HMD-side display 113 (example of a display part) and generating coordinate information thereof, and also to be capable of fusing this with information and so forth of a virtual world created by a computer or the like, and performing display thereof.

As illustrated in FIG. 1, the head-mounted display 100 includes a "main part 110" that is mounted on the head of the worker P, the "HMD-side display 113" that is placed facing both eyes of the worker P, and two "HMD-side cameras 111a and 111b", for example, that are image-capturing part placed so as to follow the line of sight of the worker P. Also included is an HMD-side illumination part 112 that is a light source.

The two HMD-side cameras 111a and 111b are installed facing in the same direction as the line of sight of the worker P, and image-capturing information that is image-captured by the two HMD-side cameras 111a and 111b is the same as the line of sight and the range of vision of the worker P.

The HMD-side display 113 is a "transmissive type", and thus is configured such that the worker P can see objects through this display 113.

Also, the HMD-side illumination part 112 is configured to cast light in the same direction as the line of sight of the worker P, but is placed at a different angle as that of the HMD-side cameras 111a and 111b. The HMD-side illumination part 112 is also configured to cast light in various types of patterns, and is configured to be capable of measuring "depth" by measuring distortion of light that is cast.

According to this configuration, performing image-capturing of an object (e.g., the pillar 600) that is placed in the same direction as the line of sight of the worker P, using the two HMD-side cameras 111a and 111b, and casting the light of the HMD-side illumination part 112 onto this pillar 600, enables "HMD-side coordinate data (MR coordinate data)" that is three-dimensional coordinate data of the pillar 600 to be generated, using a "structured illumination" technique.

Also, the reference for this "HMD-side coordinate data" is the coordinate positions of the HMD-side cameras 111a and 111b.

Although three-dimensional data is generated by the "structured illumination" technique in the present embodiment, the present invention is not limited to this, and includes arrangements of generating "three-dimensional data" by "two cameras" alone, and arrangements of generating data by a "time of flight (ToF)" technique, in which "three-dimensional data" is generated from the amount of time from light being cast from the light source until the light returns to the camera.

Also, a configuration may be made to carry out the present invention, in which, unlike the present embodiment, an optical camera and a depth sensor are placed in the head-mounted display, infrared light cast from the camera is reflected off the object, and the depth of the object is calculated by calculating the time until the reflected infrared light returns.

### Principal Configurations, etc., of Surveying Instrument 1

A configuration of the surveying instrument 1 will be described in detail below.

In FIG. 1, 0 indicates a ranging optical axis in a state in which the optical axis is not deflected. The ranging optical axis at this time is a reference optical axis.

The surveying instrument 1 is primarily made up of a tripod 2 that is a supporting device, the laser scanner 3, an operating device 4, and a swivel 5.

The swivel 5 is attached to an upper end of the tripod 2, and the laser scanner 3 is attached to the swivel 5 so as to be capable of lateral rotation and vertical rotation.

Also, the swivel 5 has a function of detecting a lateral-direction rotational angle (rotational angle in the horizontal direction) of the laser scanner 3.

A lever 7 that extends in the lateral direction is provided to the swivel 5. Operating the lever 7 enables the laser scanner 3 to be rotated in an up-down direction (vertical direction) and in the lateral direction (horizontal direction), and also enables fixation at a predetermined attitude.

Also, the laser scanner 3 itself has a function enabling horizontal rotation, and further includes a function enabling automatic rotation for tracking an object.

The laser scanner 3 has a late r-described ranging part and attitude detecting part built in. The ranging part emits ranging light to an object of measurement or over a measurement range, and receives reflected ranging light to perform ranging. Also, the attitude detecting part is capable of highly precisely detecting the attitude of the laser scanner 3 with respect to the vertical (or horizontal) direction.

The operating device 4 has communication functions for performing communication with the laser scanner 3 via necessary means, such as wired, wireless, or the like.

A configuration is made in which images, measurement states, measurement results, and so forth are transmitted to the operating device 4 from the laser scanner 3, and the images, measurement states, measurement results, and so forth are stored in the operating device 4.

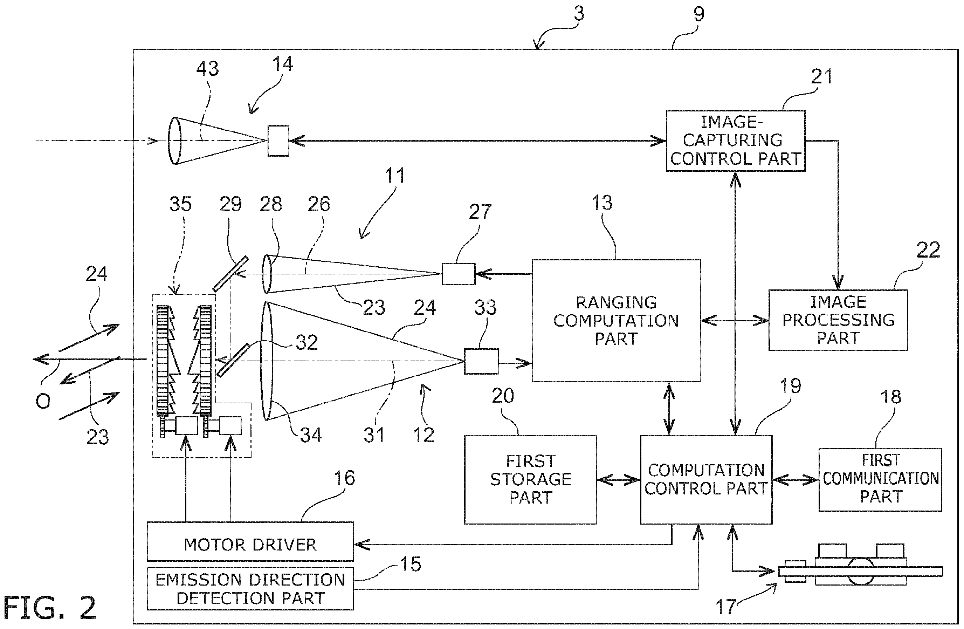

FIG. 2 is a schematic diagram illustrating principal configurations of the laser scanner 3 in FIG. 1.

As illustrated in FIG. 2, the laser scanner 3 includes a ranging light emission part 11, a light reception part 12, a ranging computation part 13, an image-capturing part 14 (camera), an emission direction detection part 15, a motor driver 16, an attitude detection part 17, a first communication part 18, a computation control part 19, a first storage part 20, an image-capturing control part 21, and an image processing part 22, which are accommodated in a housing 9 and integrated.

Note that the ranging light emission part 11, the light reception part 12, the ranging computation part 13, and so forth, make up a ranging part.

The ranging light emission part 11 has an emission optical axis 26, with a light-emitting element 27, such as a laser diode (LD) for example, being provided on the emission optical axis 26.

A light projecting lens 28 is also provided on the emission optical axis 26. Further, the emission optical axis 26 is deflected by a first reflecting mirror 29 serving as a deflecting optical member provided on the emission optical axis 26, and a second reflecting mirror 32 serving as a deflecting optical member provided on a reception optical axis 31, so as to match the reception optical axis 31. The first reflecting mirror 29 and the second reflecting mirror 32 make up an emission optical axis deflection part.

The light-emitting element 27 generates a pulsed laser beam, and the ranging light emission part 11 emits the pulsed laser beam generated by the light-emitting element 27 as ranging light 23.

Reflected ranging light 24 from the object of measurement (i.e., measurement point) enters the light reception part 12.

The light reception part 12 has the reception optical axis 31, and the emission optical axis 26 deflected by the first reflecting mirror 29 and the second reflecting mirror 32 matches the reception optical axis 31, as described above.

Note that the state in which the emission optical axis 26 and the reception optical axis 31 match will be referred to as a ranging optical axis 40 (see FIG. 1).

An optical axis deflecting part 35 is disposed on the deflected emission optical axis 26, i.e., on the reception optical axis 31. A straight optical axis that passes through the center of the optical axis deflecting part 35 is the reference optical axis O. The reference optical axis O matches the emission optical axis 26 or the reception optical axis 31 when not deflected by the optical axis deflecting part 35.

An imaging lens 34 is disposed on the reception optical axis 31 of reflected ranging light 24 that has entered by passing through the optical axis deflecting part 35. Also disposed thereupon is a light-receiving element 33 such as a photodiode (PD) for example.

The imaging lens 34 performs imaging of the reflected ranging light 24 upon the light-receiving element 33. The light-receiving element 33 receives the reflected ranging light 24 and generates a photoreception signal.

The photoreception signal is input to the ranging computation part 13. The ranging computation part 13 performs ranging to the measurement point on the basis of the photoreception signal.

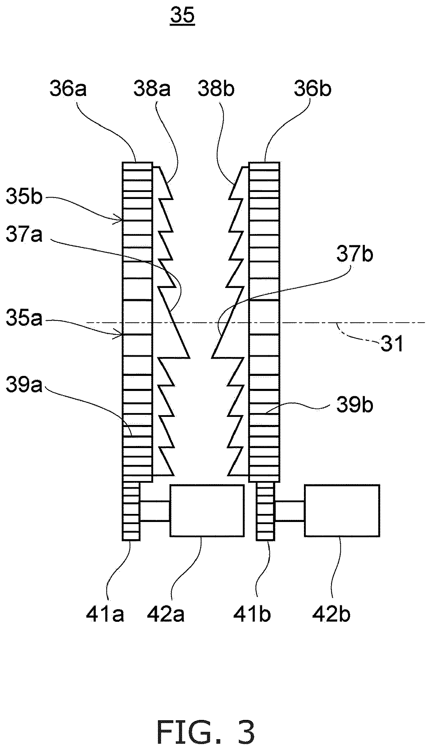

FIG. 3 is a schematic diagram illustrating principal configurations of the optical axis deflecting part 35 in FIG. 2. The optical axis deflecting part 35 will be described with reference to FIG. 3.

The optical axis deflecting part 35 is made up of a pair of optical prisms 36a and 36b. The optical prisms 36a and 36b are each disc-like, and are placed on the reception optical axis 31 so as to be orthogonal thereto, and so as to overlay each other and to be parallel to each other.

Using a Fresnel prism for each of the optical prisms 36a and 36b is preferable from the perspective of reducing the size of the device.

The middle portion of the optical axis deflecting part 35 through which the ranging light 23 passes and is emitted is a ranging light deflection portion 35a that is a first optical axis deflection portion, and portions of the optical axis deflecting part 35 other than the middle portion are a reflected ranging light deflection portion 35b that is a second optical axis deflection portion, through which the reflected ranging light 24 passes and enters.

The Fresnel prisms used as the optical prisms 36a and 36b are each made up of prism elements 37a and 37b, and a great number of prism elements 38a and 38b which are formed in parallel, and have disk-like forms. The optical prisms 36a and 36b, the prism elements 37a and 37b, and the prism elements 38a and 38b each have the same optical properties.

The prism elements 37a and 37b make up the ranging light deflection portion 35a, and the prism elements 38a and 38b make up the reflected ranging light deflection portion 35b.

The Fresnel prisms may be fabricated from optical glass, or may be formed by molding an optical plastic material. Forming by molding an optical plastic material enables inexpensive Fresnel prisms to be fabricated.

The optical prisms 36a and 36b are each disposed so as to be capable of independently rotating about the reception optical axis 31. Independently controlling the direction of rotation, amount of rotation, and speed of rotation of the optical prisms 36a and 36b enables the emission optical axis 26 of the ranging light 23 that is emitted to be deflected in an optional direction, and the reception optical axis 31 of the reflected ranging light 24 that is received is deflected so as to be parallel to the emission optical axis 26.

The external forms of the optical prisms 36a and 36b are circular, each centered on the reception optical axis 31, and the diameters of the optical prisms 36a and 36b are set taking into consideration the spread of the reflected ranging light 24 so that a sufficient quantity of light can be acquired.

A ring gear 39a is fit onto the perimeter of the optical prism 36a, and a ring gear 39b is fit onto the perimeter of the optical prism 36b.

A drive gear 41a meshes with the ring gear 39a, and the drive gear 41a is fixed to an output shaft of a motor 42a. In the same way, a drive gear 41b meshes with the ring gear 39b, and the drive gear 41b is fixed to an output shaft of a motor 42b. The motors 42a and 42b are electrically connected to the motor driver 16.

Motors regarding which detection of rotational angle can be performed, or rotate in accordance with drive input values, such as pulse motors for example, are used for the motors 42a and 42b. Alternatively, a rotational angle detector that detects the rotation amount (rotational angle) of the motors, such as encoders or the like, for example, may be used to detect the amount of rotation of the motors. The rotation amounts of the motors 42a and 42b are respectively detected, and the motors 42a and 42b are individually controlled by the motor driver 16.

Note that an arrangement may be made in which encoders are directly attached to the ring gears 39a and 39b, and the rotational angles of the ring gears 39a and 39b are directly detected thereby.

The drive gears 41a and 41b, and the motors 42a and 42b are provided at positions where they will not interfere with the ranging light emission part 11, such as on lower sides of the ring gears 39a and 39b, for example.

The light projecting lens 28, the first reflecting mirror 29, the second reflecting mirror 32, the ranging light deflection portion 35a, and so forth, make up a projection optical system, and the reflected ranging light deflection portion 35b, the imaging lens 34, and so forth, make up a reception optical system.

The ranging computation part 13 controls the light-emitting element 27 to emit a pulsed laser beam as the ranging light 23. The emission optical axis 26 is deflected by the prism elements 37a and 37b (the ranging light deflection portion 35a) such that this ranging light 23 heads toward the measurement point.

The reflected ranging light 24 reflected from the object of measurement enters through the prism elements 38a and 38b (the reflected ranging light deflection portion 35b) and the imaging lens 34, and is received by the light-receiving element 33. The light-receiving element 33 transmits a reception signal to the ranging computation part 13, the ranging computation part 13 performs ranging of the measurement point (the point to which the ranging light was cast) is performed for each pulse of light on the basis of the reception signal from the light-receiving element 33, and ranging data is stored in the first storage part 20.

Thus, ranging data of each measurement point can be acquired by performing scanning by the ranging light 23 and performing ranging for each pulse of light.

The emission direction detection part 15 detects the rotational angles of the motors 42a and 42b by counting drive pulses input to the motors 42a and 42b.

Alternatively, the rotational angles of the motors 42a and 42b are detected on the basis of signals from encoders. The emission direction detection part 15 also computes rotational positions of the optical prisms 36a and 36b on the basis of the rotational angles of the motors 42a and 42b.

The emission direction detection part 15 further computes deflection angle and emission direction of the ranging light, on the basis of the refractive index and the rotational positions of the optical prisms 36a and 36b, and inputs the computation results to the computation control part 19.

The computation control part 19 computes, from the deflection angle and the emission direction of the ranging light, the horizontal angle and vertical angle of the measurement point, and associates the horizontal angle and vertical angle with the ranging data, for each measurement point, whereby three-dimensional data of the measurement points can be obtained.

Also, the image-capturing part 14 is a camera that has an image-capturing optical axis 43 that is parallel to the reference optical axis 0 of the laser scanner 3, and has an angle of view of 50°, for example. The image-capturing part 14 acquires image data including the scanning range of the laser scanner 3.

The relation among the image-capturing optical axis 43, the emission optical axis 26, and the reference optical axis 0, is known. Also, the image-capturing part 14 is capable of acquiring moving images or continuous images.

The image-capturing control part 21 controls image-capturing by the image-capturing part 14. In a case in which the image-capturing part 14 performs image-capturing of moving images or continuous images, the image-capturing control part 21 synchronizes the timing of acquiring frame images making up the moving images or continuous images, and the timing of performing scanning by the laser scanner 3. The computation control part 19 also executes association of images with point cloud data that is scan data.

With regard to the form of measurement that the laser scanner 3 executes, ranging of particular measurement points can be performed by fixing the optical axis deflecting part 35 at each necessary deflection angle and performing ranging.

Also, the directional angle (horizontal angle and vertical angle) at the time of ranging can be acquired on the basis of detection results from the emission direction detection part 15.

Also, tilt of the laser scanner 3 as to the horizontal direction, and direction of the tilt, can be detected by the attitude detection part 17, and measurement results can be corrected into horizontal reference data on the basis of detection results of the attitude detection part 17.

That is to say, the laser scanner 3 can be used in the same way as a total station.

Also, an emission direction angle of the ranging light at the time of ranging can be detected by the rotational angle of the motor, and three-dimensional ranging data can be acquired by associating the emission direction angle at the time of ranging and the ranging data.

Accordingly, the laser scanner 3 can be made to function as a laser scanner that acquires point cloud data including three-dimensional positional data.

The surveying instrument 1 and the head-mounted display 100 in FIG. 1 each have a computer that includes a central processing unit (CPU), random-access memory (RAM), read-only memory (ROM), and so forth, which are all omitted from illustration, and which are connected via a bus or the like.

Principal Configurations, etc., of Head-Mounted Display 100

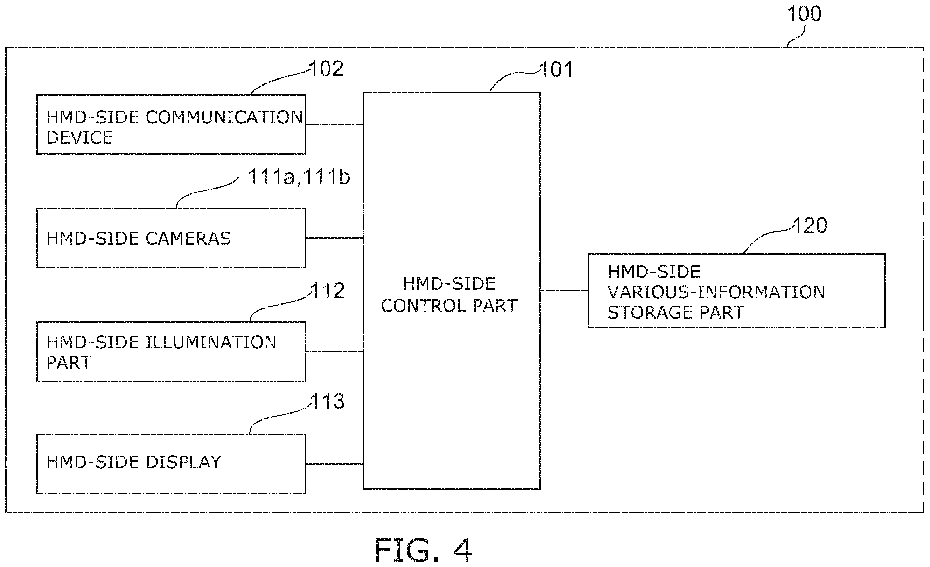

FIG. 4 is a schematic block diagram illustrating principal configurations of the head-mounted display 100 in FIG. 1.

As illustrated in FIG. 4, the head-mounted display 100 includes an "HMD-side control part 101", and this control part 101 includes an "HMD-side communication device 102" that communicates with the surveying instrument 1 in FIG. 1, the HMD-side cameras 111a and 111b, the HMD-side illumination part 112, the HMD-side display 113, and so forth.

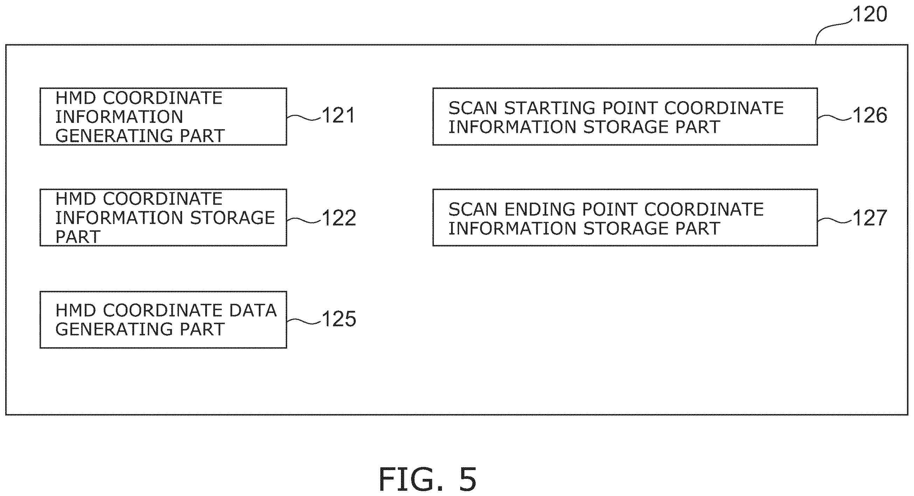

This control part 101 also controls an HMD-side various-information storage part 120 illustrated in FIG. 5.

FIG. 5 is a schematic block diagram illustrating principal components of the "HMD-side various-information storage part 120" in FIG. 4. These configurations will be described later.

### Principal Configurations, etc., of Laser Scanner 3

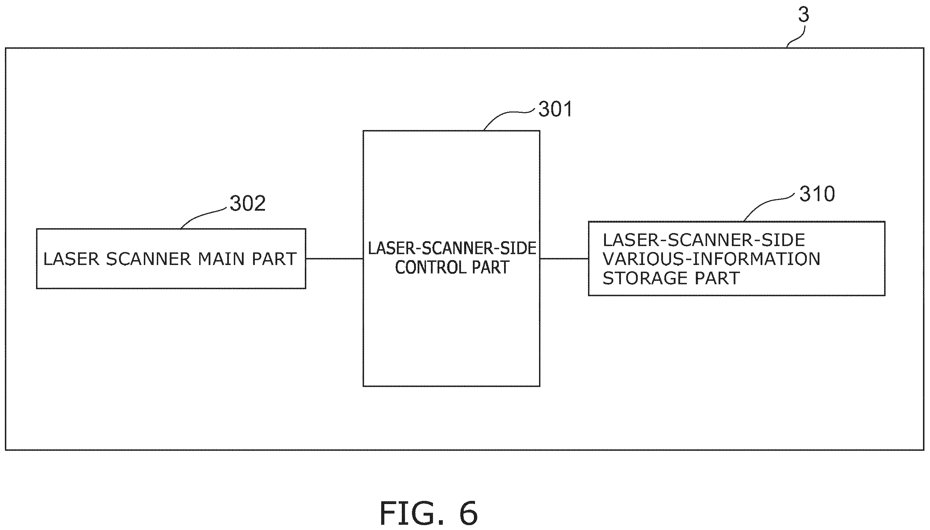

FIG. 6 is a schematic block diagram illustrating principal configurations of the laser scanner 3 in FIG. 1.

As illustrated in FIG. 6, the laser scanner 3 includes a "laser-scanner-side control part 301", and this control part 301 controls a laser scanner main part 302 that is a principal configuration of the laser scanner 3 in FIG. 1, while also controlling a "laser-scanner-side various-information storage part 310".

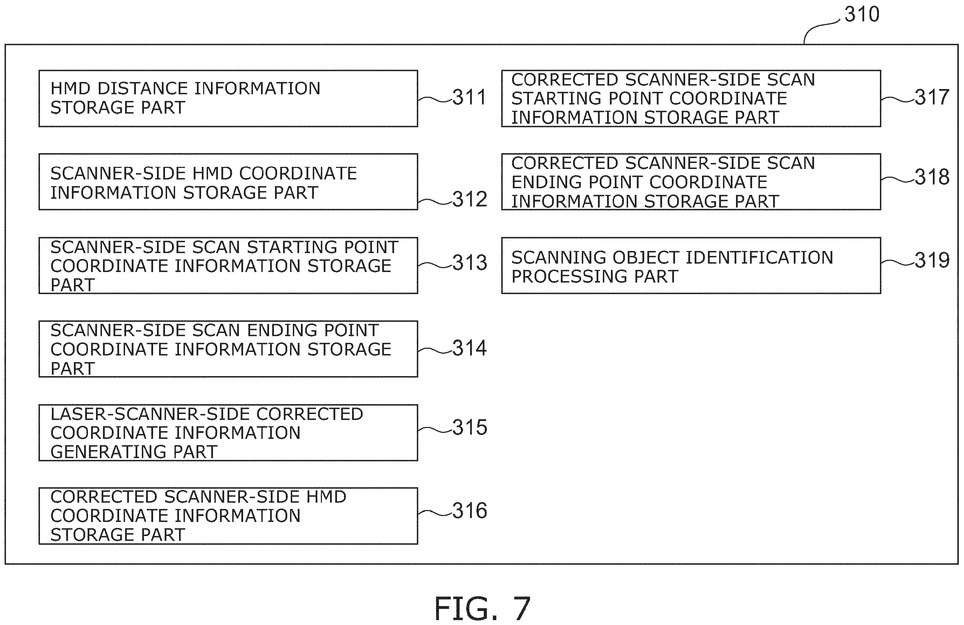

FIG. 7 is a schematic block diagram illustrating principal configurations of the "laser-scanner-side various-information storage part 310" in FIG. 6. These configurations will be described later.

### Operation Example of Point Cloud Information Generating System 500

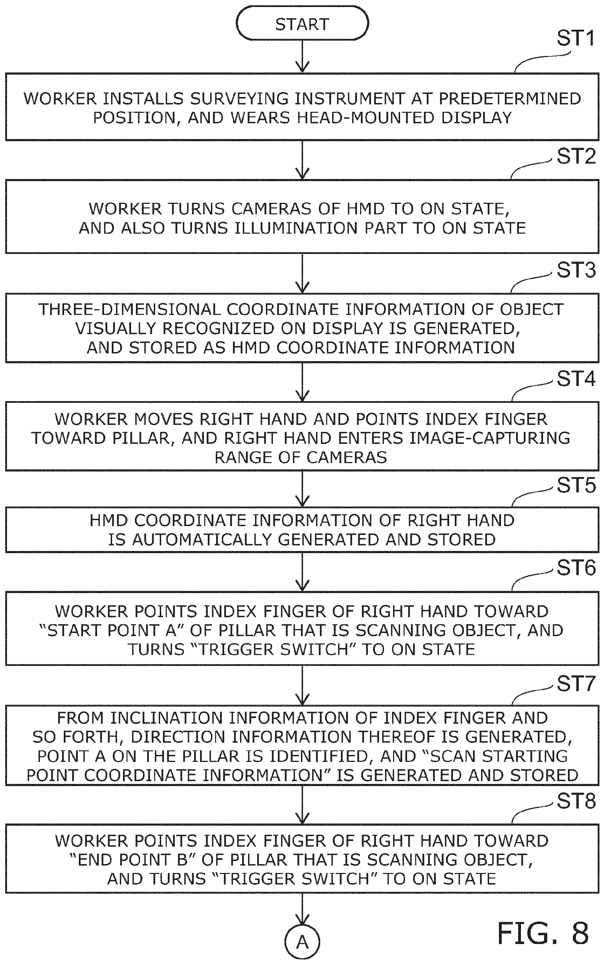

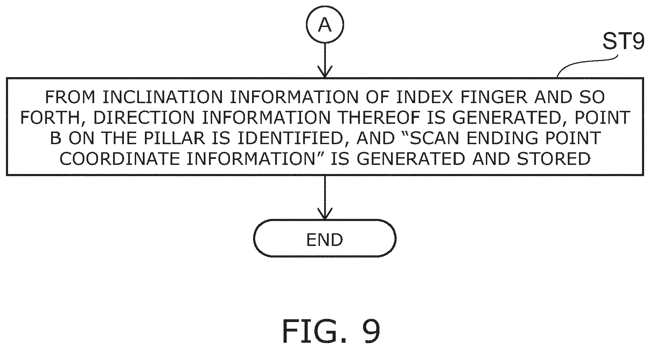

FIGS. 8 and 9 are a schematic flowchart illustrating an operation example of the point cloud information generating system 500.

In the present embodiment, an example will be described in which, in order to acquire three-dimensional point cloud data between point A to point B of a single particular pillar 600 at a building site, a worker P wears the head-mounted display 100, performs scanning using the surveying instrument 1 and thereby acquires three-dimensional point cloud data for the portion between point A and point B, and displays the acquired three-dimensional point cloud data on the HMD-side display 113. A principal operation example of the present system 500 will be described below in detail.

First, in step (hereinafter abbreviated to "ST") 1 in FIG. 8, the worker P installs the surveying instrument 1 at a predetermined position, and wears the head-mounted display (HMD) 100 on his/her own head, as illustrated in FIG. 1.

The flow then advances to ST2. In ST2, the worker P turns the HMD-side cameras 111a and 111b of the head-mounted display 100 to an ON state, and also turns the HMD-side illumination part 112 to an ON state. The HMD-side display 113 is a "transmissive type", and accordingly the worker P can visually confirm objects on the outside through this display 113.

Also, in ST3, an "HMD coordinate information generating part (program) 121" of the head-mounted display 100 in FIG. 5 operates, the HMD-side cameras 111a and 111b and the HMD-side illumination part 112 operate, three-dimensional coordinate information of the pillar 600 that the worker P is visually confirming on the HMD-side display 113 is generated by the structured illumination technique, and is stored in an "HMD coordinate information storage part 122" in FIG. 5 as HMD coordinate information (MR coordinate data).

Next, the flow advances to ST4. In ST4, when the worker P moves his/her right hand and also points his/her index finger toward the pillar 600 as illustrated in FIG. 1, and the right hand enters the image-capturing range of the HMD-side cameras 111a and 111b (the range of vision of the worker P), in ST5 the "HMD coordinate information generating part (program) 121" in FIG. 5 operates, the HMD-side illumination part 112 and so forth automatically operate, HMD coordinate information of the right hand is generated by the structured illumination technique, and is stored in the "HMD coordinate information storage part 122" in FIG. 5.

Next, the flow advances to ST6. In ST6, the worker P points the index finger of his/her right hand toward "start point A" of the pillar 600 that is the scanning object illustrated in FIG. 1, and turns a "trigger switch", which is omitted from illustration, to an ON state.

This action of the worker P is an example of execution instruction information.

The flow then advances to ST7, an "HMD coordinate data generating part (program) 125" in FIG. 5 generates, from inclination information and so forth of the index finger, direction information thereof, identifies point A, for example, of the pillar 600, generates "scan starting point coordinate information", and performs storage thereof in a "scan starting point coordinate information storage part 126" in FIG. 5.

Next, the flow advances to ST8. In ST8, the worker P points the index finger of his/her right hand toward "end point B" of the pillar 600 that is the scanning object, and turns the "trigger switch" to an ON state.

This action of the worker P is an example of execution instruction information.

The flow then advances to ST9. In ST9, the "HMD coordinate data generating part 125" in FIG. 5 generates, from inclination information and so forth of the index finger, direction information thereof, identifies point B, for example, of the pillar 600, generates "scan ending point coordinate information", and performs storage thereof in a "scan ending point coordinate information storage part 127" in FIG. 5.

This ends a process of identification of the object range for scanning (point A to point B in FIG. 1) by the head-mounted display 100.

This range of point A to point B is an example of part of an object.

Next, operations of the laser scanner 3 of the surveying instrument 1 in FIG. 1 will be described.

The surveying instrument 1 constantly measures the distance to the head-mounted display 100, and stores "HMD distance information" in an "HMD distance information storage part 311" in FIG. 7.

Accordingly, the laser scanner 3 constantly acquires distance information to the head-mounted display 100.

Also, the laser scanner 3 constantly communicates with the head-mounted display 100, and acquires information from the "HMD coordinate information storage part 122", the "scan starting point coordinate information storage part 126", and the "scan ending point coordinate information storage part 127", of the head-mounted display 100, which are illustrated in FIG. 5.

"Scanner-side HMD coordinate information", "scanner-side scan starting point coordinate information", and "scanner-side scan ending point coordinate information" are then respectively generated.

These are then respectively stored in a "scanner-side HMD coordinate information storage part 312", a "scanner-side scan starting point coordinate information storage part 313, and a "scanner-side scan ending point coordinate information storage part 314" in FIG. 7.

Thus, the coordinate information that had been stored in the head-mounted display 100 is stored at the laser scanner 3 side.

Subsequently, a "laser-scanner-side corrected coordinate information generating part (program) 315" of the laser scanner 3 in FIG. 7 operates, and from the "HMD distance information" of the "HMD distance information storage part 311", and each type of coordinate information that is the "scanner-side HMD coordinate information", the "scanner-side scan starting point coordinate information", and the "scanner-side scan ending point coordinate information", generates "corrected scanner-side HMD coordinate information", "corrected scanner-side scan starting point coordinate information", and "corrected scanner-side scan ending point coordinate information" in which each type of coordinate information has been corrected by the coordinate position of the laser scanner 3.

Next, each piece of information generated as described above is stored in a "corrected scanner-side HMD coordinate information storage part 316", a "corrected scanner-side scan starting point coordinate information storage part 317", and a "corrected scanner-side scan ending point coordinate information storage part 318".

The laser scanner 3 thus generates and stores coordinate information with the laser scanner 3 as a reference, which is synchronized with data of the head-mounted display 100, and also has constantly taken in coordinate information of the head-mounted display 100.

Next, a "scanning object identification processing part (program) 319" of the laser scanner 3 in FIG. 6 operates, references the "corrected scanner-side scan starting point coordinate information storage part 317", the "corrected scanner-side scan ending point coordinate information storage part 318", and so forth, identifies the coordinate information of the range of point A to point B of the pillar 600 that is the object of scanning, with the laser scanner 3 as a reference, performs scanning within this range (local scanning), and acquires three-dimensional point cloud data.

At this time, the optical axis deflecting part 35 and so forth that are illustrated in FIGS. 2 and 3 operate and locally scan within the above-described range. Examples of local scanning patterns thereof will be described below.

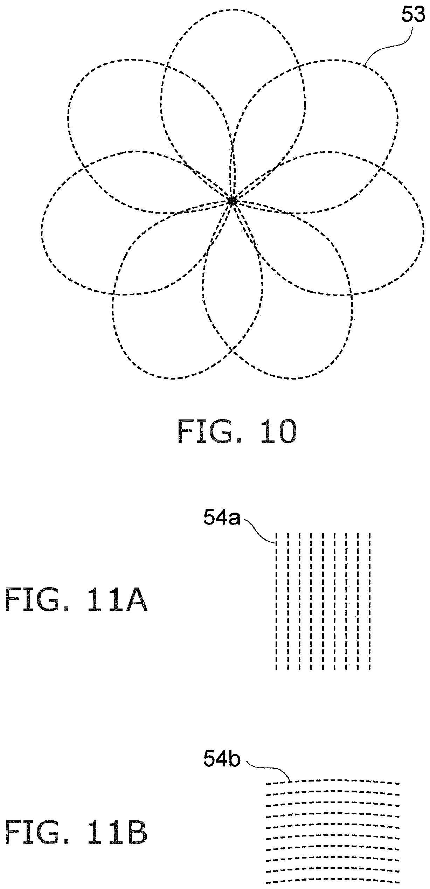

FIGS. 10, 11A, and 11B illustrate examples of scanning patterns at the time of the optical axis deflecting part 35 and so forth performing local scanning.

A scanning pattern 53 illustrated in FIG. 10 is a flower-petal-like scanning pattern, and scanning patterns 54a and 54b illustrated in FIGS. 11A and 11B are linear scanning patterns.

Thus, according to the present embodiment, a configuration is made in which just local portions identified as objects of scanning can be partially scanned.

Also, the three-dimensional point cloud data acquired by the laser scanner 3 in this way is displayed on the HMD-side display 113 of the head-mounted display 100.

As described above, according to the present embodiment, the laser scanner 3 can automatically perform scanning just within the object range, precisely, speedily, and easily, and can acquire three-dimensional point cloud data of the object range, just by the worker P wearing the head-mounted display 100 and identifying the object range for scanning by his/her finger.

Also, in the present embodiment, coordinate information including the head-mounted display 100 is saved with the laser scanner 3 as a reference, as described above.

Accordingly, a configuration is made such that when the head-mounted display 100 rotates due to the worker P in FIG. 1 turning his/her head in the sideways direction or the like, this rotation is detected, and a horizontal mechanism of the laser scanner 3 of the surveying instrument 1 itself illustrated in FIG. 1 rotates in the same way, as described above.

Accordingly, in the present embodiment, a configuration can be made in which the laser scanner 3 also rotates synchronously with the line of sight of the worker P, and in which the laser scanner 3 can automatically track the object to be scanned.

Also, in the present embodiment, a configuration can be made in which even in a case in which the head-mounted display 100 does not rotate, the laser scanner 3 faces the same area as the "angle of view" of which the HMD-side cameras 111a and 111b are performing image-capturing.

Also, in the present embodiment, description has been made that the head-mounted display 100 generates coordinate information, following which the laser scanner 3 acquires the coordinate information of the head-mounted display 100, and overall coordinate information including the laser scanner 3, the head-mounted display 100, and the pillar 600, is generated with the laser scanner 3 as a reference. However, the present invention is not limited to this, and may be configured as follows.

That is to say, a configuration may be made in which the laser scanner 3 generates overall coordinate information using the camera (image-capturing part 14) of the laser scanner 3, the HMD-side camera 111a and so forth, and the HMD-side illumination part 112 and so forth, of the head-mounted display 100, without acquiring coordinate information of the head-mounted display 100.

In this case, the worker P wearing the head-mounted display 100 then specifies the scanning portion of the pillar 600 (point A to point B) by his/her index finger, and these processes are the same as in the embodiment described above.

### First Modification of Embodiment

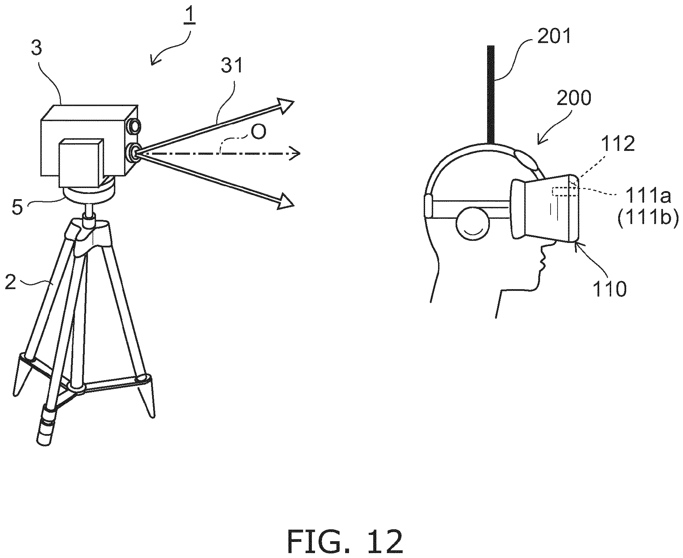

FIG. 12 is a schematic diagram illustrating a modification of the point cloud information generating system 500 according to the embodiment.

Many of the configurations of the present modification are in common with the above-described embodiment, and accordingly description thereof will be omitted, and description will be made below primarily regarding points of difference.

As illustrated in FIG. 12, in the present modification, a highly reflective object 201 having a unique form, for example, which is an example of a highly reflective portion having at least one of a unique form and a unique placement, is placed erected upon a head-mounted display 200.

In the case of the present modification, part of the highly reflective object 201 on the head-mounted display 200 can be targeted when the laser scanner 3 identifies the position of the head-mounted display 200, and accordingly measurement can be performed in a precise manner.

Also, by providing the highly reflective object 201 in this way, not only the position of the head-mounted display 200 but also the tilt thereof can be found with good precision, and the precision of detection of coordinates (or line of sight) specified by the head-mounted display 200 will be improved.

### Second Modification of Embodiment

Many of the configurations of a second modification according to the present embodiment are in common with the above-described embodiment, and accordingly description thereof will be omitted, and description will be made below primarily regarding points of difference.

In the embodiment described above, the range of vision of the worker P is displayed on the display 113 of the head-mounted display 100 of the worker P, but in the present modification, corresponding "blueprint" information is processed into three-dimensional information (e.g., computer graphics (CG)) by a computer or the like, and is displayed in combination.

Accordingly, the surroundings and so forth of a structure that is still in the blueprint stage and does not exist yet at the actual building site can be specified as a range for scanning or the like, and scanning can be performed by the laser scanner 3. Also, at the time of performing inspection through comparison with design data after actually installing a member in the building site, the object of inspection can be intuitively specified by specifying the member to be inspected on the blueprint, and scanning the item installed in real space.

Also, in a case in which the position of the member in the blueprint is different from the planned location for installation and is "deviated", work of scanning before completion of installation and changing to a position of installation after completion, and so forth, can be easily and speedily carried out, while visually confirming the amount of this difference.

### Third Modification of Embodiment

Many of the configurations of a third modification according to the present embodiment are in common with the above-described embodiment, and accordingly description thereof will be omitted, and description will be made below primarily regarding points of difference.

The embodiment described above is configured such that the worker P identifies an object such as the pillar 600 or the like displayed on the head-mounted display 100 as the object of scanning, and does not need to actually touch the pillar 600 or the like by his/her hand.

However, the present modification is configured such that the worker P may actually touch the pillar 600 to specify the object of scanning and the range thereof. Accordingly, the worker P can specify the range for scanning more accurately.

Although description has been made in the present embodiment described above by way of an example of carrying out as a device, the present invention is not limited to this, and may be stored as a computer-executable program in a storage medium such as a magnetic disk (floppy (registered trademark) disk, hard disk, or the like), an optical disc (compact disc read-only memory (CD-ROM), Digital Versatile Disc (DVD) or the like), magneto-optical (MO) disk, semiconductor memory, and so forth, and thus be distributed.

Also, it is sufficient for the storage medium to be a storage medium that is capable of storing a program, and that is computer readable. The storage format of the storage medium is not limited in particular.

Also, an operating system (OS) that is running on a computer, middleware (MW) such as database management software, network software, or the like, and so forth, may execute part of the processing for realizing the present embodiment, under instructions of a program installed from a storage medium to the computer.

Further, the storage medium according to the present invention is not limited to a medium that is independent from the computer, and also includes a storage medium to which a program that is transmitted over a local area network (LAN), the Internet, or the like, and is downloaded, is stored or temporarily stored.

Also, it is sufficient for the computer according to the present invention to execute the processing according to the present embodiment on the basis of a program stored in a storage medium, and may be a device made up of one personal computer (PC) or the like, or may be a system in which a plurality of devices are connected by a network, or the like.

Also, the term computer in the present invention is not limited to a personal computer, but rather includes arithmetic processing units included in information processing equipment, microcontrollers, and so forth, and is a collective term encompassing equipment and devices capable of realizing the functions of the present invention through a program.

An embodiment of the present invention has been described above. However, the present invention is not limited to the above embodiment, and various modifications can be made without departing from the scope of the claims.

## Claims

1. A point cloud information generating system, comprising:
a point cloud information generating device that generates three-dimensional point cloud information on an object; and
a cross reality (XR) generating device that is wearable by a user, wherein
the XR generating device includes
an image-capturing part that acquires image-capturing information in accordance with at least a line of sight of the user, and
a display part, and
three-dimensional point cloud information is generated, on the basis of execution instruction information regarding the object displayed on the display part, for the object specified by the point cloud information generating device in the execution instruction information.

2. The point cloud information generating system according to claim 1, wherein the three-dimensional point cloud information is generated for a part of the object that is specified on the basis of the execution instruction information.

3. The point cloud information generating system according to claim 2, wherein the point cloud information generating device includes an optical axis deflecting part that emits ranging light for generating point cloud information and also deflects an emission direction of the ranging light, and is configured to cast the ranging light on only part of the object, by deflecting the ranging light by the optical axis deflecting part.

4. The point cloud information generating system according to any one of claims 1 to 3, wherein a highly reflective portion, which is at least either uniquely formed or uniquely placed, is placed on the XR generating device.

5. The point cloud information generating system according to claim 1, which is configured to display, on the display part, blueprint information.

6. The point cloud information generating system according to claim 2, which is configured to display, on the display part, blueprint information.

7. The point cloud information generating system according to claim 3, which is configured to display, on the display part, blueprint information.

8. The point cloud information generating system according to claim 4, which is configured to display, on the display part, blueprint information.

9. A control method of a point cloud information generating system including a point cloud information generating device that generates three-dimensional point cloud information on an object, and a XR generating device that is wearable by a user, the control method comprising:
acquiring, by an image-capturing part of the XR generating device, image-capturing information in accordance with a line of sight of the user; and
generating three-dimensional point cloud information, on the basis of execution instruction information regarding the object displayed on a display part, for the object specified by the point cloud information generating device in the execution instruction information.

10. A non-transitory computer-readable medium storing computer program instructions for that causes a point cloud information generating system including a point cloud information generating device that generates three-dimensional point cloud information on an object and a XR generating device that is wearable by a user, to implement:
a function of acquiring, by an image-capturing part of the XR generating device, image-capturing information in accordance with a line of sight of the user; and
a function of generating three-dimensional point cloud information, on the basis of execution instruction information regarding the object displayed on a display part, for the object specified by the point cloud information generating device in the execution instruction information.
